# EUROPÄISCHE PATENTSCHRIFT

(11) **EP 0 808 683 B1**
(45) Veröffentlichungstag und Bekanntmachung des Hinweises auf die Patenterteilung: **17.04.2002**
(21) Anmeldenummer: 97108145.0
(22) Anmeldetag: 20.05.1997
(51) Int. Cl.: B23K 9/20

(54) **Bolzenschweissverfahren**
Stud welding process
Procédé de soudage de goujons

(30) Priorität: 23.05.1996 DE 19620774
(43) Veröffentlichungstag der Anmeldung: 26.11.1997
(73) Patentinhaber: HBS Bolzenschweisssysteme GmbH & Co. KG, 85221 Dachau (DE)
(72) Erfinder: Franz, Udo, Prof.Dr., 391224 Magdeburg (DE)
(74) Vertreter: Strehl Schübel-Hopf & Partner

(56) Entgegenhaltungen:
- EP-A- 0 100 787

## Beschreibung

Die Erfindung betrifft ein Verfahren zum objektiven Bewerten der Schweißung beim Anschweißen von metallischen Teilen, z.B. Bolzen, an metallischen Werkstücken mittels Spitzen- oder Hubzündung.

Aus EP-B-0 100 787 ist ein Bolzenschweißverfahren mit Spitzenzündung bekannt, bei dem der zeitliche Verlauf von Strom und Spannung sowie der Bolzenbewegung aufgezeichnet und gleichzeitig eine Schalldruckmessung des Schweißgeräusches vorgenommen wird. Aus den ermittelten Größen werden Charakteristika des Schweißvorgangs (Zeitpunkte des Spitzenkontakts, der Spitzenexplosion und des Bolzenkurzschlusses, Strommaximum, Bolzeneintauchtiefe und dergl.) abgeleitet. Diese Werte werden mit empirisch gewonnenen Größen verglichen, wobei aus dem Maß der Abweichung Rückschlüsse auf die Qualität der Schweißung gezogen werden.

Aus DE-C-195 30 416 ist ein ähnliches Verfahren bekannt, bei dem außer Strom und Spannung mittels eines Magnetsensors das magnetische Feld in der Umgebung der Schweißung erfaßt wird. Aus der Magnetfeldmessung werden Informationen über die Stromverteilung in der Lichtbogenzone sowie über eine vorhandene Blaswirkung gewonnen.

Die bekannten Verfahren erfordern die Erfassung und Auswertung einer Reihe von unterschiedlichen, für den Schweißprozeß charakteristischen Größen, um auf die Qualität der Schweißung rückzuschließen. Außerdem beschränkt sich die Bewertung auf das Maß der Übereinstimmung zwischen den Meßergebnissen und den bei einer oder mehreren vorherigen Probeschweißungen ermittelten Werten, wobei zahlreiche Meßpunkte zur Feststellung der Übereinstimmung herangezogen werden. Die bekannten Verfahren sind daher sowohl wegen der benötigten Meßeinrichtungen als auch hinsichtlich des Zeitbedarfs aufwendig.

Wegen der verschiedenen, zum Teil nicht ohne weiteres zu beurteilenden Wechselwirkungen zwischen den einzelnen gemessenen Parametern lassen sich nur bedingt brauchbare Aussagen gewinnen. Dies wird auch dadurch deutlich, daß in dem Versuch, die Sicherheit der Aussage zu verbessern, neuerdings immer mehr zusätzliche Messungen durchgeführt werden.

Die gleichzeitige Auswertung einer Vielzahl von Messungen setzt geschultes Personal voraus und erfordert auch bezüglich Einstellung und Überwachung erheblichen Aufwand. Auch aus diesem Grund eignen sich die bekannten Verfahren nicht zur unmittelbaren Beeinflussung eines laufenden Schweißvorgangs.

Der Erfindung liegt die Aufgabe zugrunde, Schwierigkeiten, wie sie beim Stand der Technik zu beobachten sind, mindestens teilweise zu beseitigen. Eine speziellere Aufgabe der Erfindung kann darin gesehen werden, eine schnellere und aussagekräftigere Bewertung der Schweißung zu ermöglichen.

Die erfindungsgemäße Lösung dieser Aufgabe besteht darin, daß der zeitliche Verlauf des Widerstands zwischen dem anzuschweißenden Teil und dem Werkstück ermittelt wird.

Es hat sich herausgestellt, daß der Schweißvorgang anhand des Widerstandsverlaufs wesentlich genauer und leichter zu bewerten ist als bei getrennter Betrachtung und Auswertung der Strom- und Spannungsverläufe.

Ein Grund dafür besteht darin, daß der Stromverlauf nur von den induktiven Kreisparametern sowie der Energie und Kapazität der zur Lichtbogenerzeugung dienenden Kondensatorbatterie bestimmt wird, während Lichtbogenprozesse den Stromverlauf nur unwesentlich beeinflussen. Der Spannungsverlauf spiegelt zwar den Schweißvorgang besser wieder, ist aber für sich betrachtet wiederum nur begrenzt aussagefähig.

Demgegenüber sind im Widerstandsverlauf nicht nur alle aus den Einzelkurven von Strom und Spannung ableitbaren Parameter enthalten, so daß sich schon daher die Anzahl der für die Bewertung des Schweißvorgangs notwendigen Meßpunkte reduzieren läßt; zusätzlich gestattet der zeitliche Widerstandsverlauf Aussagen, die aus den Strom- und Spannungs-Einzelkurven nicht erkennbar sind.

Die Weiterentwicklung der Erfindung nach Anspruch 2 dient ebenso wie das in Anspruch 3 dargelegte Verfahren dazu, den Schweißvorgang im günstigsten Moment zu beenden, wobei die Beendigung nach Anspruch 4 oder 5 durch Absenken oder völliges Abschalten des Schweißstroms oder durch sofortiges Eintauchen des anzuschweißenden Teils in die Schmelze erfolgt.

Bei der Ausgestaltung des erfindungsgemäßen Verfahrens nach Anspruch 6 dient der bei einem Schweißvorgang beobachtete zeitliche Widerstandsverlauf dazu, die Verfahrensparameter für nachfolgende Schweißvorgänge so einzustellen, daß optimale Schweißergebnisse erzielt werden, gemäß Anspruch 7 insbesondere so, daß ein Anstieg des Widerstands nach der Zündung des Lichtbogens vermieden wird.

Eine für die Bewertung des Widerstandsverlaufs zweckmäβige Anzahl von Meßpunkten ist in Anspruch 8 angegeben.

Die Weiterentwicklung des erfindungsgemäßen Verfahrens nach Anspruch 9 führt zu einer noch aussagekräftigeren Bewertung der Schweißung.

Typische Parameter, die sich aus dem ermittelten zeitlichen Widerstandsverlauf bestimmen lassen, sind in den Ansprüchen 10 und 11 angegeben.

Die Erfindung wird nachstehend anhand der beigefügten Diagramme näher erläutert, die den zeitlichen Verlauf des Schweißstroms I(t) (oberes Diagramm), der Spannung U(t) (mittleres Diagramm) und des Widerstandes R(t) bei zwei verschiedenen Schweißvorgängen **A**, **B** darstellen.

Wie den Diagrammen zu entnehmen, unterscheiden sich die beiden Schweißvorgänge **A** und **B** im Stromverlauf praktisch nicht. Auch der Spannungsverlauf ist in beiden Fällen qualitativ der gleiche, wobei lediglich zeitliche Verschiebungen im Lichtbogen-Zündzeitpunkt und im Eintauchzeitpunkt (Abfall der Spannung auf 0) zu beobachten ist.

Demgegenüber ist der im unteren Diagramm gezeigte zeitliche Widerstandsverlauf bei den beiden Schweißvorgängen insbesondere in der Endphase deutlich verschieden. Hier ist nämlich für den mit B bezeichneten Schweißvorgang ein deutlicher Widerstandsanstieg feststellbar.

Dieser Widerstandsanstieg bedeutet eine stark zunehmende Verspritzung von bereits geschmolzenem Metall sowie ein Brennen des Lichtbogens außerhalb der Bildungsfläche. Anhand der Widerstandskurve läßt sich auch ohne die beim Stand der Technik zusätzlich erforderliche Magnetfeldmessung eine Blaswirkung eindeutig nachweisen. Alle diese mit einem Widerstandsanstieg einhergehenden Erscheinungen wirken sich auf das Schweißergebnis negativ aus. Je stärker der Widerstand zum Ende des Schweißvorgangs steigt, um so geringer ist die Qualität der Schweißverbindung.

Die Widerstandsbestimmung läßt sich zu einer Prozeßsteuerung derart heranziehen, daß der Schweißvorgang bei Überschreiten eines vorgegebenen Widerstandswerts, einer vorgegebenen Widerstandserhöhung oder einer vorgegebenen Widerstands-Anstiegsrate beendet wird. Die Beendigung kann dadurch erfolgen, daß der Lichtbogen durch sofortiges Eintauchen des anzuschweißenden Teils (Bolzens) in die Schmelze gelöscht (Kurve **C**) oder der Schweißstrom reduziert oder abgeschaltet (Kurve **D**) wird.

Zum Abschalten kann ein zur Schweißstrecke paralleler kommutierender Stromkreis dienen. Es ist auch möglich, beide Maßnahmen, Beenden der Lichtbogen-Brennzeit und Reduzierung des Schweißstroms, gleichzeitig anzuwenden.

Optimale Ergebnisse werden erzielt, wenn der Widerstandswert während der Lichtbogen-Brenndauer im wesentlichen konstant bleibt oder leicht fällt, wie dies bei dem Schweißvorgang **A** der Fall ist. Eine Verlängerung der Lichtbogenzeit führt in jedem Fall zu einer Verschlechterung der Schweißqualität.

Zusätzlich zu der Ermittlung des Widerstands beispielsweise an der Meßstelle **6** oder des Widerstandsanstiegs durch Vergleich der an den Meßstellen **6** und **5** erhaltenen Werte sind anhand der Widerstandskurve R(t) folgende Auswertungen durchführbar:
- An der Meßstelle **1** können Rückschlüsse auf das Bolzenmaterial gezogen und Frühzündungen erkannt werden.
- Der Widerstandsverlauf innerhalb des Bereichs **2** gestattet Rückschlüsse auf die Geometrie der Bolzenspitze.
- Aus Beobachtungen innerhalb der Fenster **3** und **4** lassen sich Aussagen über die Lichtbogenzündung und die Oberflächenbeschaffenheit des Werkstücks machen.
- Der Widerstandswert an der Meßstelle **5** gestattet eine Beurteilung des Spaltabstands und der Schweißenergie.
- Die Beobachtung der Widerstandskurve im Bereich **7** ergibt Aussagen über die Kinematik und die Kraftwirkung der Bolzenbewegung sowie den Energieumsatz in der Lichtbogenphase.

Wie dargelegt, kann die Widerstandsbestimmung zur Prozeßsteuerung für den gerade laufenden Schweißvorgang herangezogen werden, um diesen im günstigsten Moment zu beenden. Eine weitere Möglichkeit besteht darin, die aus einem ersten Schweißvorgang gewonnenen Ergebnisse dazu heranzuziehen, die Parameter für anschließende Schweißungen gleicher Bolzen an gleichen Werkstücken vorzugeben. Bei gleicher Schweißenergie kann beispielsweise die Federkraft erhöht werden, mit der der Bolzen gegen das Werkstück gedrückt wird. Somit ermöglicht die Erfindung erstmals einen gesteuerten Bolzenschweißprozeß.

Für eine weiter optimierte Prozeßführung kann es zweckmäßig sein, zusätzlich zum Widerstandsverlauf die Bolzenbewegung zu erfassen, um die das Schweißergebnis beeinflussende Kinematik und Kraftwirkung der Bolzenbewegung in der Bindungsphase zu ermitteln.

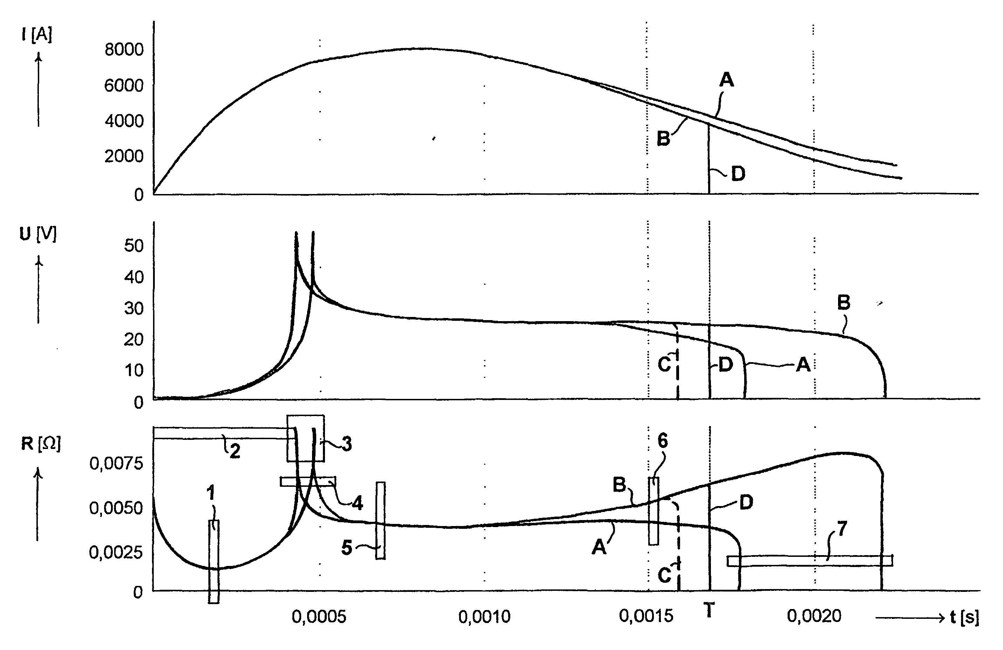

## Patentansprüche

1. Bolzenschweißverfahren zum Anschweißen eines Teils an ein Werkstück mittels Spitzen- oder Hubzündung, wobei die Schweißung durch Bestimmen einer elektrischen Größe des Schweißstromkreises bewertet wird, **dadurch gekennzeichnet, daß** der zeitliche Verlauf des Widerstandes zwischen dem anzuschweißenden Teil und dem Werkstück ermittelt wird.

2. Verfahren nach Anspruch 1, wobei der Schweißvorgang beendet wird, wenn der Widerstand oder der Widerstandsanstieg oder die Widerstands-Anstiegsrate während des Lichtbogenbrennens einen Vorgabewert überschreitet.

3. Verfahren nach Anspruch 1, wobei der Schweißvorgang beendet wird, bevor die Schmelze des anzuschweißenden Teils diejenige des Werkstücks berührt.

4. Verfahren nach Anspruch 2 oder 3, wobei der Schweißvorgang durch gesteuertes Absenken des Schweißstroms beendet wird.

5. Verfahren nach einem der Ansprüche 2 bis 4, wobei der Schweißvorgang durch beschleunigtes Eintauchen des anzuschweißenden Teils in die Schmelze beendet wird.

6. Verfahren nach Anspruch 1, wobei der zeitliche Widerstandsverlauf zur Einstellung von Verfahrensparametern für nachfolgende Schweißvorgänge herangezogen wird.

7. Verfahren nach Anspruch 6, wobei die Verfahrensparameter so eingestellt werden, daß ein Ansteigen des Widerstandes nach Zündung des Lichtbogens vermieden wird.

8. Verfahren nach einem der vorhergehenden Ansprüche, wobei der zeitliche Widerstandsverlauf anhand von 3 bis 15 Meßpunkten bewertet wird.

9. Verfahren nach einem der vorhergehenden Ansprüche, wobei zur Bewertung der Schweißung zusätzlich der Bewegungsablauf des anzuschweißenden Teils ermittelt wird.

10. Verfahren nach einem der vorhergehenden Ansprüche, wobei aus dem zeitlichen Widerstandsverlauf mindestens einer der folgenden Parameter ermittelt wird:
Material des anzuschweißenden Teils;
Geometrie der dem Werkstück zugewandten Spitze des anzuschweißenden Teils;
Blaswirkung während des Schweißvorgangs; Spritzerbildung;
für den Schweißvorgang aufgewendete Energie;
Oberflächenverschmutzung des Schweißmaterials;
Oberflächenbeschichtung des Werkstücks;
Abbrand einer Oberflächenbeschichtung des Werkstücks während des Schweißvorgangs;
Zündbedingungen für den Lichtbogen.

11. Verfahren nach Anspruch 10, wobei Materialeigenschaften und/oder -zustände des anzuschweißenden Teils aus dem Widerstandsverlauf in der Lichtbogen-Zündphase ermittelt werden.

## Claims

1. A stud welding method for welding a part to a workpiece by means of tip arc ignition or lift-off arc ignition, wherein the weld is evaluated by detecting an electrical value of the welding current circuit, **characterised in that** the time characteristic of the resistance between the part to be welded and the workpiece is detected.

2. The method of claim 1, wherein the welding process is terminated when the resistance or the increase of the resistance or the rate of increase of the resistance exceeds a predetermined value during the arcing period.

3. The method of claim 1, wherein the welding process is terminated before the melt of the part to be welded contacts the melt of the workpiece.

4. The method of claim 2 or 3, wherein the welding process is terminated by controlled reduction of the welding current.

5. The method of any of claims 2 to 4, wherein the welding process is terminated by accelerated immersion of the part to be welded into the melt.

6. The method of claim 1, wherein the time characteristic of the resistance is used for adjusting process parameters for subsequent welding processes.

7. The method of claim 6, wherein the process parameters are adjusted so that an increase of the resistance upon ignition of the arc is avoided.

8. The method of any of any preceding claim, wherein the time characteristic of the resistance is evaluated on the basis of 3 to 15 points of measurement.

9. The method of any of any preceding claim, wherein the kinematic behaviour of the part to be welded is additionally detected for evaluating the weld.

10. The method of any of any preceding claim, wherein at least one of the following parameters is detected from the time characteristic of the resistance:
material of the part to be welded;
geometry of the tip of the part to be welded opposite the workpiece;
arc blow effect during the welding process;
spattering;
energy used for the welding process;
surface contamination of the welding material;
surface coating of the workpiece;
burn-out of a surface coating of the workpiece during the welding process;
arc ignition conditions.

11. The method of claim 10, wherein material properties and/or material conditions of the part to be welded are detected from the resistance characteristic during the arc ignition phase.

## Revendications

1. Procédé de soudage de goujons pour souder un élément sur une pièce au moyen d'un amorçage par pointe ou d'un amorçage par plot, la soudure étant évaluée par détermination d'une grandeur électrique du circuit de soudage, **caractérisé en ce qu'**on détermine la variation dans le temps de la résistance entre l'élément à souder et la pièce.

2. Procédé selon la revendication 1, dans lequel le soudage est terminé lorsque la résistance ou l'augmentation de la résistance ou le coefficient d'augmentation de la résistance dépasse une valeur prédéterminée pendant la durée de l'arc électrique.

3. Procédé selon la revendication 1, dans lequel le soudage est terminé avant que la matière en fusion de l'élément à souder ne vienne en contact avec celle de la pièce.

4. Procédé selon la revendication 2 ou 3, dans lequel le soudage est terminé par abaissement commandé du courant de soudage.

5. Procédé selon l'une des revendications 2 à 4, dans lequel le soudage est terminé par immersion accélérée de l'élément à souder dans la matière en fusion.

6. Procédé selon la revendication 1, dans lequel la variation dans le temps de la résistance est utilisée pour régler des paramètres de procédé pour des opérations de soudage suivantes.

7. Procédé selon la revendication 6, dans lequel les paramètres de procédé sont réglés de manière à éviter une augmentation de la résistance après amorçage de l'arc électrique.

8. Procédé selon l'une des revendications précédentes, dans lequel la variation dans le temps de la résistance est évaluée à l'aide de 3 à 15 points de mesure.

9. Procédé selon l'une des revendications précédentes, dans lequel pour évaluer la soudure on détermine en outre l'allure du déplacement de l'élément à souder.

10. Procédé selon l'une des revendications précédentes, dans lequel on détermine, à partir de la variation dans le temps de la résistance, au moins l'un des paramètres suivants :
matière de l'élément à souder ;
géométrie de la pointe de l'élément à souder tournée vers la pièce ;
effet de soufflage pendant le soudage ;
formation de projections ;
énergie appliquée pour le soudage ;
encrassement superficiel de la matière de soudage ;
revêtement de surface de la pièce ;
combustion d'un revêtement de surface de la pièce pendant le soudage ;
conditions d'amorçage de l'arc électrique.

11. Procédé selon la revendication 10, dans lequel on détermine des propriétés de matière et/ou des états de matière de l'élément à souder à partir de l'allure de la résistance dans la phase d'amorçage de l'arc électrique.
